# EUROPÄISCHE PATENTSCHRIFT

(11) **EP 1 593 298 B1**
(45) Veröffentlichungstag und Bekanntmachung des Hinweises auf die Patenterteilung: **04.07.2007**
(21) Anmeldenummer: 05102911.4
(22) Anmeldetag: 13.04.2005
(51) Int. Cl.: A01D 57/02

(54) **Haspel für eine Erntegutbergungseinrichtung**
Reel for a harvesting machine
Rabatteur pour machine de récolte

(30) Priorität: 05.05.2004 DE 102004022196
(43) Veröffentlichungstag der Anmeldung: 09.11.2005
(73) Patentinhaber: DEERE & COMPANY, Moline, Illinois 61265-8098 (US)
(72) Erfinder: Lanzinger, Bernhard, 66440, Böckweiler (DE); Weichholdt, Dirk, 57200, Sarreguemines (FR); Büermann, Martin, 66500, Hornbach (DE); Berendsen, Arjan, 7044, Aj Lengel (NL)
(74) Vertreter: Holst, Sönke

(56) Entgegenhaltungen:
- DE-B3-3102004 001 38
- US-A- 47 338
- US-A- 3 771 299
- US-A- 4 016 710

## Beschreibung

Die Erfindung betrifft eine Haspel für eine Erntegutbergungseinrichtung, mit sich über die Breite der Haspel erstreckenden Zinkenträgern, die Zinken zur Förderung von Erntegut tragen, und mit Streben zur Abstützung der Zinkenträger, die durch Strebenhalterungen am Zinkenträger befestigt sind.

Haspeln finden an Erntegutbergungseinrichtungen, insbesondere an Schneidwerken, Verwendung, um stehendes Erntegut einem Messerbalken und einer Querfördereinrichtung zuzuführen. Sie weisen eine Anzahl an Zinkenträgern (in der Regel sechs) auf, die sich über die Breite der Erntegutbergungseinrichtung erstrecken und eine Anzahl an Zinken tragen. Die Zinkenträger sind endseitig an Tragsternen drehbar gelagert und in der Regel mit einer Winkelsteuerung versehen, so dass sich der Winkel des Zinkenträgers gegenüber den Tragsternen sukzessive ändert, wenn sich der Tragstern um eine mittige, horizontal und quer zur Fahrtrichtung verlaufende Achse dreht. Zusätzliche Abstützelemente zwischen den Tragsternen erhöhen die Stabilität der Zinkenträger. Im Stand der Technik erstrecken sich die Abstützelemente in der Regel sternförmig von einem mittleren Trägerrohr nach außen zu den Zinkenträgern; es wurden aber auch Ausführungsformen offenbart, bei denen benachbarte Zinkenträger durch Streben direkt untereinander verbunden wurden (US 2 024 735 A, US 2 102 709 A, US 3 468 109 A).

Zur Verbindung zwischen dem Abstützelement und dem Zinkenträger bzw. mit dem Erntegut zusammenwirkenden Querelementen der Haspel wurden verschiedene Ausführungsformen beschrieben. In der US 47 338 A, US 2 024 735 A, US 2 102 709 A, US 3 771 299 A und US 4 016 710 A wird eine U-förmige Lasche verwendet, die das Querelement umrundet, während in der US 2 610 460 eine Klammer beschrieben wird, die von drei Seiten am Querelement anliegt. Falls man das Abstützelement beispielsweise zu Reparaturzwecken demontieren möchte, ist ein relativ großer Zeitaufwand erforderlich, da zunächst eine Schraubverbindung abzunehmen ist, bevor die Lasche oder Klammer entfernt werden kann.

Mit Federelementen versehene, beim Zusammenbau selbsttätig verrastende Verbindungen zwischen dem Abstützelement und dem mittleren Trägerrohr wurden in der US 686 823 A beschrieben. In der US 1 123 949 A dient zur Befestigung des Abstützelements am Trägerrohr eine Schraube. Diese Verbindungen erfordern einen Flansch am mittleren Trägerrohr, der jedoch am Zinkenträger nicht zur Verfügung steht.

In der nachveröffentlichten DE 10 2004 001 383 A wird eine Haspel ohne mittleres Trägerrohr beschrieben. Die Zinkenträger werden durch Streben untereinander verbunden, die ein tragendes Fachwerk bilden.

Die der Erfindung zu Grunde liegende Aufgabe wird darin gesehen, eine Haspel bereitzustellen, die sich schnell und einfach montieren und demontieren lässt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Strebenhalterungen aus zwei Lagerhälften aufzubauen. Die Lagerhälften nehmen den Zinkenträger zwischen sich auf, sind daher mit einer geeigneten Lagerfläche versehen. Die Lagerhälften sind relativ zueinander beweglich, insbesondere verschwenkbar oder voneinander trenn- und an der dem Strebenhalterungsabschnitt abgewandten Seite aneinander fixierbar, um sie im auseinandergezogenen Zustand auf den Zinkenträger aufsetzen oder davon abnehmen zu können, während sie im zusammengefügten Zustand den Zinkenträger umschließen. Beide Lagerhälften weisen jeweils einen Strebenhalterungsabschnitt auf. Im montierten Zustand umschließt die Strebe die beiden Strebenhalterungsabschnitte und fixiert auf diese Weise die Lagerhälften aneinander. Die Strebe kann den Zinkenträger mit einem anderen Zinkenträger oder einem zentralen Trägerrohr der Haspel verbinden, falls ein derartiges Trägerrohr vorhanden ist.

Auf diese Weise erhält man eine Haspel, die sich einfach und vorzugsweise sogar werkzeuglos zusammenbauen und demontieren lässt.

Es bietet sich an, die Strebe an der Strebenhalterung zu arretieren. Dazu kann eine federnde Zunge an einem Strebenhalterungsabschnitt angeordnet sein, die im montierten Zustand in eine entsprechende Öffnung der Strebe eingreift und die Strebe in ihrer axialen Richtung fixiert.

Eine Fixierung der Strebe in azimutaler Richtung, d. h. eine Sicherung gegen Drehungen oder Verwindungen um die Längsachse der Strebe, kann durch einen nicht kreisförmigen Innenquerschnitt der Strebe und einen nicht kreisförmigen Außenquerschnitt der Strebenhalterungsabschnitte erzielt werden. Die Querschnitte können beispielsweise oval, rechteckig, quadratisch oder sechs-oder achteckig sein.

Die Zinkenträger drehen sich in einer bevorzugten Ausführungsform gegenüber den Strebenhalterungen, um die Orientierung der Finger an die jeweilige Position der Zinkenträger anzupassen. Bei dieser Ausführungsform ist es sinnvoll, wenn die Strebenhalterung in Längsrichtung des Zinkenträgers gegen Verschiebung gesichert ist. Dazu können geeignete Halterungen gemeinsam mit benachbarten Fingern am Zinkenträger befestigt werden. Soll sich der Zinkenträger gegenüber den Strebenhalterungen nicht drehen, können letztere hingegen auf beliebige Weise drehfest am Zinkenträger fixiert werden.

Die Strebenhalterungen halten in der bevorzugten Ausführungsform der Erfindung nur jeweils eine Strebe. Durch geeignete Formgebung wäre es aber möglich, jeweils zwei (zu den benachbarten Zinkenträgern führenden) oder drei (zu den benachbarten Zinkenträgern und zu einem zentralen Trägerrohr führenden) Strebenhalterungen in einer einzigen Strebenhalterung zu vereinigen. Dadurch würde die Stabilität der Haspel weiter vergrößert. Dabei könnte die Strebenhalterung aus mehreren Lagerhälften oder -elementen aufgebaut sein, die im Bereich ihrer Strebenhalterabschnitte jeweils durch die daran angebrachte Strebe aneinander gehalten werden.

In den Zeichnungen sind zwei nachfolgend näher beschriebene Ausführungsbeispiele der Erfindung dargestellt. Es zeigt:
- Fig. 1: einen Mähdrescher mit einem Erntegutbergungsvorsatz, der eine Haspel aufweist,
- Fig. 2: eine perspektivische Teilansicht einer erfindungsgemäßen Haspel,
- Fig. 3: eine perspektivische Ansicht einer ersten Lagerhälfte einer Strebenhalterung,
- Fig. 4: eine perspektivische Ansicht der ersten Lagerhälfte der Strebenhalterung mit einer daran anbrachten zweiten Lagerhälfte, positioniert an einem Zinkenträger,
- Fig. 5: eine perspektivische Ansicht der Strebenhalterung mit einer daran angebrachten Strebe, angebracht am Zinkenträger,
- Fig. 6: eine perspektivische Ansicht einer zweiten Ausführungsform der Strebenhalterung, positioniert am Zinkenträger, und
- Fig. 7: eine perspektivische Ansicht der zweiten Ausführungsform der Strebenhalterung mit einer daran angebrachten Strebe.

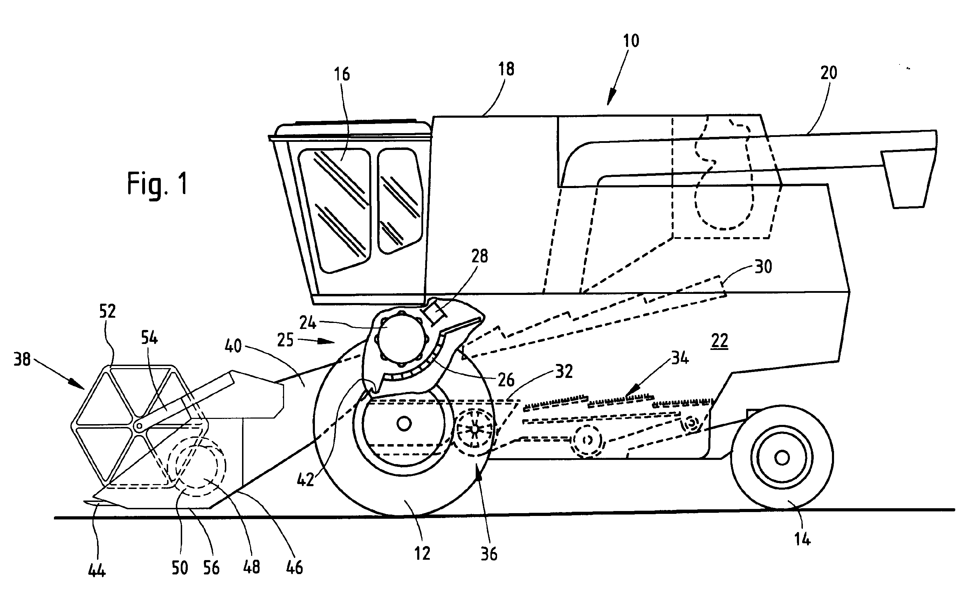

Ein in der Figur 1 gezeigter Mähdrescher 10 ist auf vorderen angetriebenen und rückwärtigen lenkbaren Rädern 12 bzw. 14 getragen und weist eine Fahrerkabine 16 auf, von der aus er von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Strohschüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Strohschüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Einzugskanal 40 in Form eines Schrägförderers und eine Steinfangmulde 42 der Dreschtrommel 24 zugeführt, nachdem es von einer Erntegutbergungseinrichtung 38 vom Boden aufgenommen worden ist.

Die Erntegutbergungseinrichtung 38 ist in der dargestellten Ausführungsform ein Schneidwerk, an dessen Vorderseite sich ein sich hin- und herbewegender Messerbalken 44 befindet. Ein Rahmen 46 der Erntegutbergungseinrichtung 38 trägt außerdem einen Schneckenförderer 48 mit um ein mittiges Rohr umlaufenden Windungen 50. Oberhalb und vor dem Schneckenförderer 48 befindet sich eine Haspel 52, die dazu dient, stehendes Gut dem Messerbalken 44 und dem Schneckenförderer 48 zuzuführen. Die Haspel 52 ist an ihren beiden Enden durch Haspelträgerarme 54 mit dem Rahmen 46 verbunden und wird durch einen mechanischen oder hydraulischen Antrieb um ihre Längsachse angetrieben, so dass sie sich in Figur 1 im Gegenuhrzeigersinn dreht.

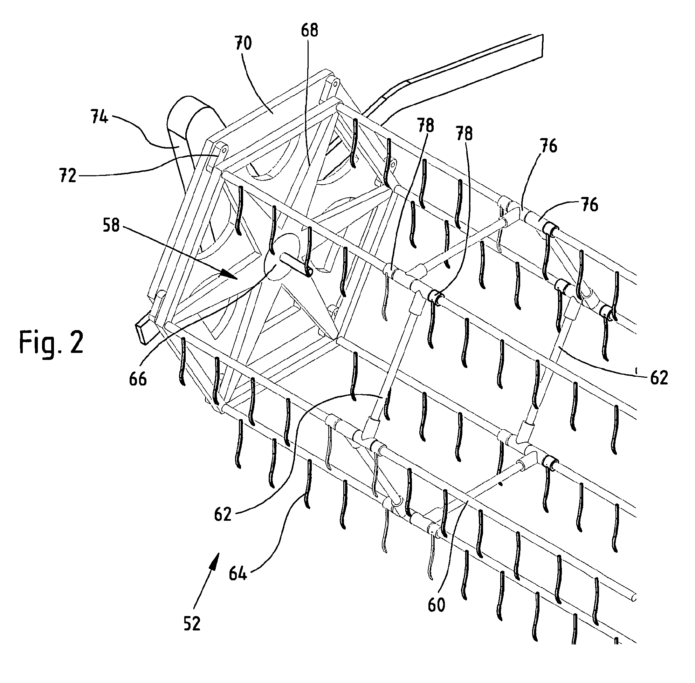

Die Figur 2 zeigt eine perspektivische Ansicht des in Fahrtrichtung des Mähdreschers 10 rechten Endabschnitts der Haspel 52. Die Haspel 52 setzt sich aus einem endseitigen Tragstern 58, sechs Zinkenträgern 60 aus kreiszylindrischen Rohren mit über ihre Länge konstantem Außenquerschnitt, in Sechsecken angeordneten Streben 62 und an den Zinkenträgern 60 befestigten Zinken 64 zusammen. Tragsterne 58 sind an beiden Enden der Haspel 52 angeordnet und weisen jeweils sechs von einer Nabe 66 sich radial nach außen erstreckende Arme 68 auf. Zwischen den äußeren Enden der Arme 68 der Tragsterne 58 erstrecken sich die Zinkenträger 60 über die gesamte Breite der Haspel 52. Sie sind entweder einteilig oder setzen sich aus Einzelelementen zusammen, die jeweils einen Teil der Länge umfassen und mechanisch aneinander befestigt sind. Die Zinkenträger 60 sind drehbar an den Armen 68 gelagert und auch gegenüber den Streben 62 drehbar.

An der rechten Seite der Haspel 52 ist neben dem Tragstern 58 eine Steuerscheibe 70 angeordnet, deren Drehachse exzentrisch zur Achse der Nabe 66 angeordnet ist. Die Zinkenträger 60 sind durch Steuerhebel 72, die als Schwenkantriebe dienen, mit benachbarten Ecken der Steuerscheibe 70 verbunden. Beim Betrieb, in dem die Nabe 66 und mit ihr die Arme 68 des Tragsterns 58 durch einen Motor 74 in Drehung versetzt werden, führen die Zinkenträger 60 somit eine Drehbewegung gegenüber den Armen 68 durch, so dass die Zinken 64 über den ganzen Drehbereich der Haspel 52 etwa nach unten orientiert sind, wie in der Figur 2 dargestellt. Dadurch erreicht man eine gute Zuführung des Ernteguts zu dem Messerbalken 44 und zum Schneckenförderer 48.

Die Haspel 52 ist im Innenraum zwischen den Zinkenträgern 60 frei von tragenden Elementen. Die Naben 66 der Tragsterne 58 sind daher nicht durch ein sich über die Breite der Haspel 52 erstreckendes Trägerrohr oder ähnliche sich über die Breite erstreckende, tragende Halteelemente, beispielsweise dünne Streben o. ä., verbunden. Der sich ergebende freie Raum hat den Vorteil, dass die erfindungsgemäße Haspel 52 leichter als mit Trägerrohr versehene Ausführungsformen ist, und dass die Sicht auf die Erntegutbergungseinrichtung 38 nicht durch das Trägerrohr verdeckt wird. Der Bediener in der Fahrerkabine 16 hat somit eine gute Sicht auf den Messerbalken 44 und den Bereich vor der Erntegutbergungseinrichtung 38.

Um der Haspel 52, die eine Breite von 6 m oder mehr haben kann (z. B. 9 m), die erforderliche Stabilität zu verleihen, sind die Streben 62 vorgesehen. Die Streben 62 verbinden ausschließlich benachbarte Zinkenträger 60 und bilden eine Wabenform. Außer den Streben 62 und den Tragsternen 58 sind keine weiteren, die Zinkenträger 60 stützenden Elemente vorhanden. Die Streben 62 und die Zinkenträger 60 bilden ein Fachwerk. Die Verbindung zwischen den Streben 62 und den Zinkenträgern 60 ermöglicht eine Drehung der Zinkenträger 60 um ihre Längsachse, während alle anderen Freiheitsgrade verhindert werden. Über die Breite der Haspel 52 sind in geeigneten Abständen Streben 62 verteilt.

Anhand der Figur 2 ist erkennbar, dass die Streben 62 durch jeweils zwei endseitige Strebenhalterungen 76 mit den Zinkenträgern 60 verbunden sind. An den Zinkenträgern 60 sind somit jeweils eine zum vorlaufenden Zinkenträger 60 und eine zum nachlaufenden Zinkenträger 60 weisende Strebenhalterung 76 alternierend links und rechts bzw. umgekehrt nebeneinander angeordnet. Die Strebenhalterungen 76 umschließen die Zinkenträger 60 mit kreisförmigem Innenquerschnitt und ermöglichen auf diese Weise die beschriebene Drehung der Zinkenträger 60. Um axiale Verschiebungen der Strebenhalterungen 76 auf den Zinkenträgern 60 zu vermeiden, sind die Strebenhalterungen 76 in Längsrichtung der Zinkenträger 60 fixiert. Dazu liegen ringförmige Halter 78, die jeweils gemeinsam mit einem Zinken 64 am Zinkenträger 60 befestigt sind, jeweils von außen an der Seitenfläche der Strebenhalterungen 76 an, an der keine zweite Strebenhalterung 76 anliegt. Die ringförmigen Halter 78 könnten alternativ oder zusätzlich geeignete Hinterschneidungen an den Strebenhalterungen 76 untergreifen.

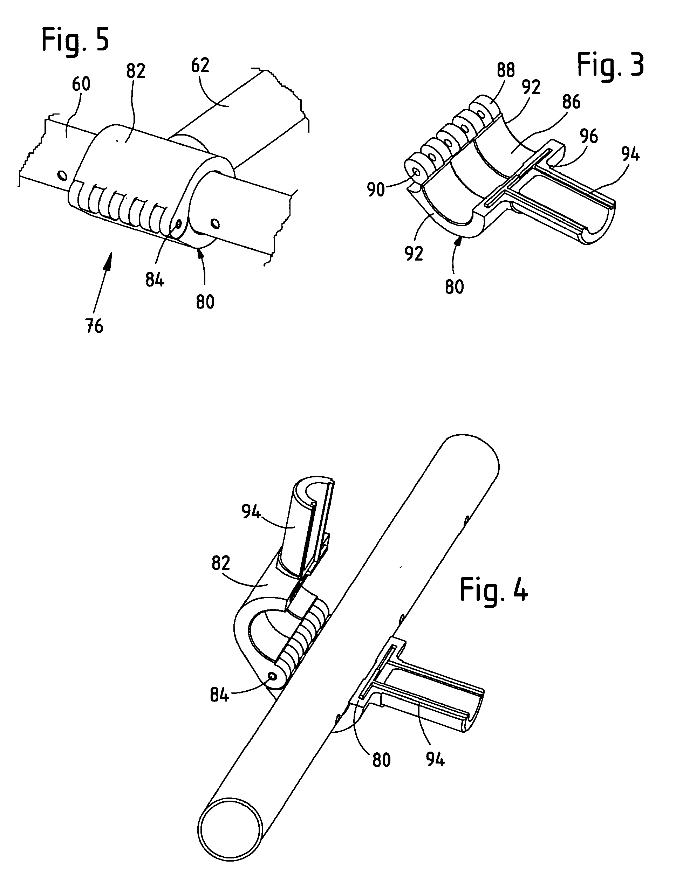

Eine erste Ausführungsform einer geeigneten Strebenhalterung 76 ist in den Figuren 3 bis 5 dargestellt. Jede Strebenhalterung umfasst eine erste Lagerhälfte 80 und eine zweite Lagerhälfte 82, die gemeinsam das Ende der Strebe 62 haltern. Die zwei Lagerhälften 80, 82 sind durch einen Scharnierstift 84 aneinander befestigt.

Jede Lagerhälfte 80, 82 umfasst einen Lagerabschnitt 86, der eine innere halbkreisförmige Lageroberfläche und gegenüber liegende parallele Enden 92 aufweist. An einer Seite des Lagerabschnitts 86 erstrecken sich fünf Scharnieransätze 88 radial von der halbkreisförmigen Lageroberfläche fort. Bohrungen 90 in den Scharnieransätzen 88 sind zueinander koaxial und parallel zur Längsachse der Lageroberfläche. An der gegenüberliegenden Seite des Lagerabschnitts 86 ist ein sich radial zur halbkreisförmigen Lageroberfläche erstreckender Strebenhalterungsabschnitt 94. Der Strebenhalterungsabschnitt 94 weist einen im Wesentlichen halbkreisförmigen Flansch 96 auf. Jede Lagerhälfte 80, 82 ist vorzugsweise aus einem harten, stoßfesten Material, welches auch ohne Schmierung eine lange Lebensdauer der Lagerung gewährleistet. Ein Polyamid, wie Zytel ST 801, wurde erfolgreich verwendet.

Der Versatz der Scharnieransätze 88 und die Anordnung der Bohrungen 90 für den Scharnierstift 84 sind derart gestaltet, dass die Lageroberflächen sich gegenüberliegen und einander zugewandt sind, wenn jeweils zwei Lagerhälften 80, 82 zusammengesetzt werden, wobei die beiden Lagerhälften 80, 82 zusammenpassen und der Scharnierstift 84 in die Bohrung 90 eingesetzt werden kann, so dass die Lagerhälften 80, 82 durch das - aus Scharnierstift 84 und Bohrungen 90 gebildete - Scharnier drehbar aneinander befestigt sind, und die zusammengefügten Lageroberflächen eine näherungsweise zylindrische Öffnung für den Zinkenträger 60 definieren. Die zusammenpassenden Lagerhälften 80, 82 sind vorzugsweise miteinander identisch. Es ist denkbar, andere Formen der Kopplung als den Scharnierstift 84 zu verwenden, um die Lagerhälften 80, 82 schwenkbar aneinander zu koppeln. So wäre denkbar, die zwei Lagerhälften 80, 82 als einzelne Komponente mit einem einteiligen Scharnier zu gießen.

Die schwenkbare Lagerung der zwei Lagerhälften 80, 82 kann geöffnet, auf dem Zinkenträger 60 positioniert und geschlossen werden. Der Strebenhalterungsabschnitt 94 jeder Lagerhälfte 80, 82 ist um eine senkrecht zur Achse der Lageroberfläche verlaufende Achse symmetrisch.

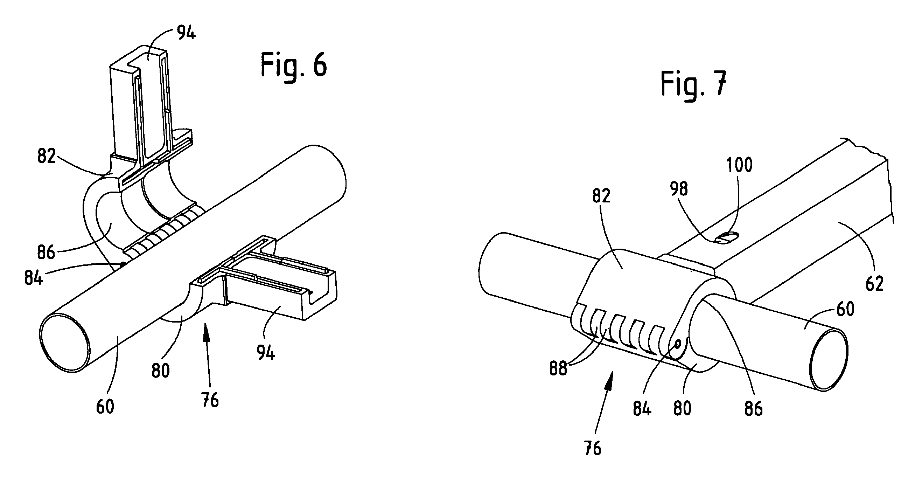

Wenn die Lagerhälften 80, 82 zusammengefügt werden, bilden die Strebenhalterungsabschnitte 94 einen zylindrischen Sockel, den ein Ende der hohlen, kreiszylindrischen Strebe 62 umschließt. Dadurch, dass die Strebe 62 die Strebenhalterungsabschnitte 94 umschließt, werden die Lagerhälften 80, 82 aneinander fixiert. Die beiden durch die Strebe 62 untereinander verbundenen Zinkenträger 60 verhindern wiederum, dass die Strebe 62 von den Strebenhalterungsabschnitten 94 abrutscht. Vorzugsweise ist zusätzlich eine weitere Befestigung der Strebenhalterungsabschnitte 94 an der Strebe vorgesehen, beispielsweise durch einen Stift, der geeignete Bohrungen in der Strebe 62 und in den Strebenhalterungsabschnitten 94 durchdringt (nicht dargestellt), oder ein flexibles Element in einem oder beiden der Strebenhalterungsabschnitte 94, das nach außen vorgespannt ist und im montierten Zustand an der Seitenwand einer Öffnung in der Strebe 62 angeordnet ist, entsprechend der Ausführungsform gemäß Figur 6 und 7.

Die Figuren 6 und 7 zeigen eine zweite Ausführungsform einer Strebenhalterung 76 mit einer daran befestigten Strebe 62. Mit der ersten Ausführungsform übereinstimmende Elemente sind mit denselben Bezugszeichen gekennzeichnet. Die zweite Ausführungsform unterscheidet sich von der ersten Ausführungsform dadurch, dass der Innen- und Außenquerschnitt der Strebe 62 rechteckig oder quadratisch ist. Dementsprechend ist auch der Querschnitt der Strebenhalterungsabschnitte 94 rechteckig. Dadurch vermeidet man unerwünschte Verwindungen oder Drehbewegungen zwischen der Strebenhalterung 76 und der Strebe 62.

Weiterhin ist eine Einschnappverbindung zwischen einer Lagerhälfte 82 und der Strebe 62 vorgesehen. Der Strebenhalterungsabschnitt 94 der Lagerhälfte 82 ist mit einer einteilig angegossenen oder angespritzten, federnden Zunge 98 versehen, die sich vom Strebenhalterungsabschnitt 94 nach außen erstreckt, solange sie nicht niedergedrückt wird. Die Zunge 98 hat eine von außen nach innen, d. h. zum Zinkenträger 60 hin ansteigende Rampe, während ihre dem Zinkenträger 60 zugewandte Flanke steil abfällt. Die Strebe 62 hat eine Öffnung 100, in die sich die Zunge 98 erstreckt, wenn die Strebe 62 ihre gewünschte Position gegenüber der Strebenhalterung 76 erreicht hat. Durch Niederdrücken der Zunge 98 kann die Strebe 62 wieder von der Strebenhalterung 76 abgezogen werden. Es wäre selbstverständlich denkbar, auch die Lagerhälfte 80 mit einer Zunge 98 zu versehen, die in eine zweite Öffnung in der der Öffnung 100 gegenüberliegenden Wand der Strebe 62 eingreift.

Die beschriebenen Strebenhalterungen 76 werden somit zunächst mit einer Lagerhälfte 80 auf einen Zinkenträger 60 aufgesetzt. Dann wird die Strebenhalterung 76 geschlossen, indem die Scharnierverbindung um den Scharnierstift 84 verschwenkt wird.

Die Strebe 62 wird auf die Strebenhalterungsabschnitte 94 aufgeschoben, wobei die Stirnseite der Strebe 62 an der Rampe der Zunge 98 zum Anliegen kommt und die federnde Zunge 98 sukzessive nach innen, d. h. zum Strebenhalterungsabschnitt 94 der jeweils anderen Lagerhälfte 80 hin drückt. Gelangt die Zunge 98 in den Bereich der Öffnung 100, federt sie selbsttätig nach außen und arretiert die Strebe 62 an der Strebenhalterung 76. Zur Demontage wird die Zunge 98 von Hand oder mittels eines Werkzeugs nach innen gedrückt, so dass die Strebe 62 danach abgenommen werden kann. Anschließend können die Lagerhälften der Strebenhalterung 76 auseinandergeschwenkt werden.

Die erfindungsgemäße Haspel 52 ermöglicht somit eine einfache Montage und Demontage der Streben 62.

## Patentansprüche

1. Haspel (52) für eine Erntegutbergungseinrichtung (38), mit sich über die Breite der Haspel (52) erstreckenden Zinkenträgern (60), die Zinken (64) zur Förderung von Erntegut tragen, und mit Streben (62) zur Abstützung der Zinkenträger (60), die durch Strebenhalterungen (76) am Zinkenträger (60) befestigt sind, **dadurch gekennzeichnet, dass** die Strebenhalterungen (76) jeweils zwei relativ zueinander bewegliche Lagerhälften (80, 82) umfassen, die einen Zinkenträger (60) zwischen sich einschließen, dass die Lagerhälften (80, 82) jeweils einen Strebenhalterungsabschnitt (94) aufweisen, und dass die Strebenhalterungsabschnitte (94) beider Lagerhälften (80, 82) gemeinsam von der Strebe (62) umschlossen werden, so dass die Lagerhälften (80, 82) durch die Strebe (62) aneinander fixiert sind.

2. Haspel (52) nach Anspruch 1, **dadurch gekennzeichnet, dass** die Strebe (62) an der Strebenhalterung (76) arretiert ist.

3. Haspel (52) nach Anspruch 2, **dadurch gekennzeichnet, dass** die Strebe (62) eine Öffnung (100) aufweist, in die im montierten Zustand eine federnde Zunge (98) eines Strebenhalterungsabschnitts (94) eingreift.

4. Haspel (52) nach einem der Ansprüche 1 bis 3, **dadurch gekennzeichnet, dass** der Innenquerschnitt der Strebe (62) und der Außenquerschnitt der Strebenhalterungsabschnitte (94) nicht kreisförmig ist.

5. Haspel (52) nach einem der Ansprüche 1 bis 4, **dadurch gekennzeichnet, dass** die Zinkenträger (60) schwenkbar gelagert sind und durch Schwenkantriebe, beispielsweise Steuerhebel (72), verschwenkt werden.

6. Haspel (52) nach einem der Ansprüche 1 bis 5, **dadurch gekennzeichnet, dass** die Strebenhalterung (76) gegen axiale Verschiebung entlang des Zinkenträgers (60) gesichert ist.

7. Haspel (52) nach einem der Ansprüche 1 bis 6, **dadurch gekennzeichnet, dass** die Strebenhalterungen (76) nur je eine Strebe (62) halten.

8. Haspel (52) nach einem der Ansprüche 1 bis 7, **dadurch gekennzeichnet, dass** die Strebe (62) zwei benachbarte Zinkenträger (60) untereinander verbindet.

9. Haspel (52) nach einem der Ansprüche 1 bis 8, **dadurch gekennzeichnet, dass** die Lagerhälften (80, 82) an ihrer von den Strebenhalterungsabschnitten abgewandten Seite durch ein Scharnier schwenkbar miteinander verbunden sind.

10. Erntebergungseinrichtung (38) mit einer Haspel nach einem der vorhergehenden Ansprüche.

## Claims

1. A reel (52) for a crop harvesting device (38), with tine carriers (60) which extend over the width of the reel (52) and carry tines (64) for feeding crop, and with struts (62) for supporting the tine carriers (60) which are fixed to the tine carriers (60) by strut holders (76), **characterized in that** the strut holders (76) each comprise two support halves (80, 82) movable relative to one another, which enclose a tine carrier (60) between them, **in that** the support halves (80, 82) each comprise a strut holding section (94) and **in that** the strut holding sections (94) of both support halves (80, 82) are together surrounded by the strut (62), so that the support halves (80, 82) are fixed to one another by the strut (62).

2. A reel (52) according to claim 1, **characterized in that** the strut (62) is arrested on the strut holder (76).

3. A reel (52) according to claim 2, **characterized in that** the strut (62) has an opening (100) in which a sprung tongue (98) of a strut holding section (94) engages in the mounted state.

4. A reel (52) according to any of claims 1 to 3, **characterized in that** the inner cross-section of the strut (62) and the outer cross-section of the strut holding sections (94) are not circular.

5. A reel (52) according to any of claims 1 to 4, **characterized in that** the tine carriers (60) are mounted for turning and are turned by turn drives, for example control levers (72).

6. A reel (52) according to any of claims 1 to 5, **characterized in that** the strut holder (76) is secured against displacement along the tine carrier (60).

7. A reel (52) according to any of claims 1 to 6, **characterized in that** the strut holders (76) each hold only one strut (62).

8. A reel (52) according to any of claims 1 to 7, **characterized in that** the struts (62) connect two adjacent tine carriers (60) to one another.

9. A reel (52) according to any of claims 1 to 8, **characterized in that** the support halves (80, 82) are pivotally connected to one another by a hinge at their side remote from the strut holding sections.

10. A harvesting device (38) with a reel according to any of the preceding claims.

## Revendications

1. Rabatteur (52) pour un dispositif de ramassage de récolte (38), comportant des porte-dents (60), qui s'étendent sur toute la largeur du rabatteur (52) et qui portent des dents (64) pour le transfert de la masse végétale, et comportant des entretoises (62), qui sont destinées à supporter les porte-dents (60) et qui sont fixées contre des fixations (76) sur le porte-dents (60), **caractérisé en ce que** les fixations (76) comportent chacune deux demi-paliers (80, 82), qui sont mobiles l'un par rapport à l'autre et qui enserrent entre eux un porte-dents (60), **en ce que** les demi-paliers (80, 82) comportent chacun une partie de fixation d'entretoise (94) et **en ce que** les parties de fixation d'entretoise (94) des deux demi-paliers (80, 82) sont entourées conjointement par l'entretoise (62), de telle sorte que les demi-paliers (80, 82) sont fixés l'un à l'autre par l'entretoise (62).

2. Rabatteur (52) selon la revendication 1, **caractérisé en ce que** l'entretoise (62) est bloquée sur la fixation (76).

3. Rabatteur (52) selon la revendication 2, **caractérisé en ce que** l'entretoise (62) comporte un orifice (100), dans lequel s'engage, dans la position montée, une languette (98) flexible d'une partie de fixation d'entretoise (94).

4. Rabatteur (52) selon l'une quelconque des revendications 1 à 3, **caractérisé en ce que** la section intérieure de l'entretoise (62) et la section extérieure des parties de fixation d'entretoise (94) ne sont pas circulaires.

5. Rabatteur (52) selon l'une quelconque des revendications 1 à 4, **caractérisé en ce que** les porte-dents (60) sont montés pivotants et pivotent par l'intermédiaire de systèmes d'entraînement, tels que des leviers de commande (72).

6. Rabatteur (52) selon l'une quelconque des revendications 1 à 5, **caractérisé en ce que** la fixation (76) est bloquée contre tout mouvement dans le sens axial le long du porte-dents (60).

7. Rabatteur (52) selon l'une quelconque des revendications 1 à 6, **caractérisé en ce que** les fixations (76) ne supportent chacune qu'une seule entretoise (62).

8. Rabatteur (52) selon l'une quelconque des revendications 1 à 7, **caractérisé en ce que** l'entretoise (62) relie deux porte-dents (60) adjacents l'un à l'autre.

9. Rabatteur (52) selon l'une quelconque des revendications 1 à 8, **caractérisé en ce que** les demi-paliers (80, 82), sur leur côté opposé aux parties de fixation d'entretoise, sont reliés l'un à l'autre de manière pivotante par l'intermédiaire d'une charnière.

10. Dispositif de ramassage de récolte (38) comportant un rabatteur selon l'une quelconque des revendications précédentes.
